# EUROPEAN PATENT APPLICATION

(11) **EP 4 122 352 A2**
(43) Date of publication of application: **25.01.2023**
(21) Application number: 22180963.5
(22) Date of filing: 24.06.2022
(51) Int. Cl.: A44C 13/00, A44C 17/02, F16B 21/08

(54) **SPLICING STRUCTURE**

(30) Priority: 01.07.2021 CN 202121503495 U
(71) Applicant: Yau, Tsz Yau, Hong Kong, Hong Kong SAR (CN)
(72) Inventor: YAU, Tsz Yau, Hong Kong (CN); YE, Zuwei, Dongguan City (CN)
(74) Representative: Modiano, Gabriella Diana

(57) **Abstract**

The present application discloses a splicing structure that can be broadly apply to toy, tool, furniture, handicrafts, jewelry or other fields. The splicing structure comprises a splicing block capable to detachably spliced with one another, said splicing block comprises a splicing hole and a splicing column. The splicing structure also comprises a plug piece having an insertion rod, said insertion rod having protrusions along its periphery; a receptacle having an insertion hole, wherein outer diameter of the protrusions, inner diameter of the insertion hole and outer diameter of the insertion rod decrease. The plug piece is mounted between the splicing column and the splicing hole, said receptacle is mounted within inner hole of the splicing column; when two splicing blocks are spliced through inserting a second splicing block into a first splicing block, insertion rod of the first splicing block is inserted into the insertion hole of the second splicing block by interference fit and the two splicing blocks are firmly spliced together by snap fit connection between the protrusions of the first splicing block and the insertion hole of the second splicing block.

## Description

### CROSS REFERENCE TO RELATED APPLICATION

The present application claims priority to Chinese patent application no. 202121503495.1 filed on 1 July 2021, the disclosure of which is hereby incorporated by reference in its entirety.

### TECHNICAL FIELD

The present application relates to the field of tools/handicrafts/furniture/toys/jewelry, and more particularly, relates to splicing structure with certain plane shape/space shape/geometric three-dimensional structure formed by splicing the structures with one another, and the splicing structure may be used in splicing tools, handicrafts, furniture, jewelry, toys and the like.

### BACKGROUND

A splicing structure is widely applied in various fields, such as the fields of tools, handicrafts, furniture and toys due to its convenience to assemble and reusability. Take the splicing structure used in the field of splicing toys as an example, splicing toys are very popular with large number of players due to its strong interestingness. Moreover, splicing structure also has a very positive effect on improving cognition, imagination, creativity and a manipulative ability, therefore splicing structures have been widely used as enlightenment education tool for children in recent years.

Splicing hole and splicing column are traditionally served as connecting-fixing structures in conventional splicing structures. During assembly, splicing column is inserted into splicing hole to achieve the positioning and fixation between splicing blocks only by means of the binding force between the splicing column and the splicing hole. Such kind of fixing mode is not only insecure, but also demands for higher machining precision. In addition, the positioning and fixation between the splicing blocks are achieved by the binding force between the splicing column and the splicing hole, as a result the material that may be used for manufacturing the splicing blocks are greatly limited; plastic is widely used as the manufacturing material of splicing blocks in conventional splicing structures, limiting the types of product that are applicable, and the incapability to apply on diversity of products..

Multiple splicing structures have been proposed in the prior arts, for example, the above discussed conventional splicing toys are disclosed in Chinese invention patents CN101132842A and CN105792905A. The splicing toys disclosed in these documents have a plurality of plastic splicing blocks. One of two splicing blocks spliced with each other is formed with a concave splicing hole, and one of the two splicing blocks is formed with a convex splicing column. Plurality of splicing blocks are connected by inserting the splicing column into the splicing hole.

Another example of a splicing structure is disclosed in Chinese invention patent CN107982937A. The splicing structure in this Chinese invention patent provides a safer/firmer connection, but the splicing structure adopted therein is complex in structure and large in size, therefore such splicing structure results in high production costs and is difficult to assemble, thus it is inconvenient to apply such structure to connect other components for different fields.

### SUMMARY

Accordingly, the inventor of the present application takes into account the needs for a splicing structure that can be manufactured with diversified materials, including metallic materials and non-metallic materials, so the splicing structure is applicable to a diversity of products, while to ensure reliable connection and fixation between splicing blocks as well as reducing the requirement of machining precision in manufacturing the splicing blocks.

The present invention is proposed in view of the above practical situations and aims to provide splicing block with a more desirable splicing connection, reducing production costs, and improving mass production of the splicing block.

To achieve the above objectives, the present application provides a splicing structure, comprising: at least two splicing blocks capable to detachably spliced with one another, wherein the splicing block comprises a splicing hole and a splicing column capable of being inserted into a splicing hole of another splicing block, the splicing column comprises an inner hole formed by extending along an axial direction of the splicing column, the splicing structure further comprising: a receptacle with an insertion hole, wherein the insertion hole may be a circular hole having an inner diameter of a first diameter; and a plug piece having an insertion rod, wherein the insertion rod may be cylindrical with an outer diameter of a second diameter, a continuous protrusion or one or more discontinuous protrusions are arranged around periphery of the insertion rod, and the one or more protrusions have an outer diameter of a third diameter; wherein at least the following relationship is satisfied between the receptacle and the plug piece: the first diameter is greater than the second diameter, and the first diameter is smaller than the third diameter; wherein the plug piece is mounted between the inner hole of the splicing column and the splicing hole, and the receptacle is mounted within the inner hole of the splicing column; and when the splicing column of one of the splicing block is inserted into the splicing hole of another splicing block to splice the two splicing blocks, the insertion rod of said one of the splicing block is inserted into the insertion hole of said another splicing block by interference fit, and the two splicing blocks are firmly spliced together by snap fit connection between the protrusions of said one of the splicing block and the insertion hole of said another splicing block.

In one embodiment, the splicing hole and the splicing column of the same splicing block are coaxially arranged, and the inner hole of the splicing column is connected with and coaxial with the splicing hole.

In one embodiment, the insertion rod comprises: a base, wherein the insertion rod is fixedly or detachably mounted between the inner hole of the splicing column and the splicing hole through the base; a first insertion member and a second insertion member, wherein the first insertion member and the second insertion member are arranged on the same side of the base, and the protrusion is arranged around peripheries of the first insertion member and the second insertion member.

In one embodiment, the protrusions are arranged at the middle portion of the peripheries of the first insertion member and the second insertion member, and the first insertion member and the second insertion member taper inwardly from the protrusions towards ends of the first insertion member and the second insertion member distal from the base.

In one embodiment, the base and the inner hole are integrally formed.

In one embodiment, along inner walls of the inner hole comprise one or more indentations corresponding to the base, the insertion rod is mounted within the splicing column through snap fit connection between the base and the indentations.

In one embodiment, each of two or more splicing blocks capable to splice with one another comprises a splicing hole and a splicing column, positions of the two or more splicing blocks may be interchangeable when being spliced with one another to form two or more layers of splicing blocks.

In one embodiment, the plug piece and the splicing column are integrally formed.

In one embodiment, the plug piece is mounted within the inner hole by interference fit, adhesion and/or magnetic force.

In one embodiment, the splicing block is made of a metallic, non-metallic or magnetic material.

In a second embodiment, the present invention provides a splicing structure, comprising: a receptacle with an insertion hole, wherein the insertion hole may be a circular hole with an inner diameter of a first diameter; and a plug piece having an insertion rod, wherein the insertion rod may be cylindrical having an outer diameter of a second diameter, a continuous protrusion or one or more discontinuous protrusions are arranged around periphery of the insertion rod, and the protrusions have outer diameters of a third diameter; wherein at least the following relationship is satisfied between the receptacle and the plug piece: the first diameter is greater than the second diameter, and the first diameter is smaller than the third diameter, the insertion rod is inserted into the insertion hole by interference fit, and the receptacle and the plug piece are detachably spliced together by snap fit connection between the protrusions and the insertion hole.

In one embodiment, the receptacle and the plug piece are detachably spliced together by adhesion and/or magnetic force.

By adopting the technical solutions of the present invention, the splicing blocks may be made of a range of materials, the present invention greatly improves application of the present invention on a greater diversity of products, ensures reliable connection and fixation between the splicing blocks, reduces production costs of the splicing blocks, and improves mass production of the splicing blocks, thus achieving good technical effects.

### BRIEF DESCRIPTION OF THE DRAWINGS

The drawings described herein are for illustrative purposes only and are not intended to limit the scope of the present application in any way.

The present application is described in detail hereinafter with reference to the drawings and the embodiments.
FIG. 1A is a perspective view of a plug piece according to the first embodiment of the present invention.
FIG. 1B is a side view of the plug piece according to the first embodiment of the present invention.
FIG. 1C is a top view of the plug piece according to the first embodiment of the present invention.
FIG. 1D is a cross-sectional view of the plug piece according to the first embodiment of the present invention.
FIG. 2A is a perspective view of the plug piece of the first embodiment of the present invention being mounted on a jewelry member.
FIG. 2B is another perspective view of the plug piece of the first embodiment of the present invention being mounted on the jewelry member.
FIG. 2C is a bottom view of the plug piece of the first embodiment of the present invention being mounted on the jewelry member.
FIG. 2D is a cross-sectional view cut along the line "A-A" of FIG.2C of the jewelry member mounted with the plug piece of the first embodiment of the present invention.
FIG. 3A is a perspective view of a plug piece according to the second embodiment of the present invention.
FIG. 3B is a side view of the plug piece according to the second embodiment of the present invention.
FIG. 3C is a top view of the plug piece according to the second embodiment of the present invention.
FIG. 3D is a cross-sectional view of the plug piece according to the second embodiment of the present invention.
FIG. 4A is a perspective view of the plug piece of the second embodiment of the present invention being mounted on a jewelry member.
FIG. 4B is another perspective view of the plug piece of the second embodiment of the present invention being mounted on the jewelry member.
FIG. 4C is a bottom view of the plug piece of the second embodiment of the present invention being mounted on the jewelry member.
FIG. 4D is a cross-sectional view cut along the line "A-A of FIG. 2C of the jewelry member being mounted with the plug piece of the second embodiment of the present invention.
FIG. 5A is a perspective view of a receptacle according to the first embodiment of the present invention
FIG. 5B is a side view of the receptacle according to the first embodiment of the present invention.
FIG. 5C is a cross-sectional view of the receptacle when cut along a line "A-A" in FIG. 5B.
FIG. 6A is a perspective view of the receptacle of the first embodiment of the present invention in a jewelry member.
FIG. 6B is another perspective view of the receptacle of the first embodiment of the present invention in the jewelry member.
FIG. 6C is a bottom view of the receptacle of the first embodiment of the present invention in the jewelry member.
FIG. 6D is a cross-sectional view of FIG. 6C cut along the line "A-A" showing the jewelry member including the receptacle.
FIG. 7A is a perspective view of the plug piece of the first embodiment of the present invention connected with the receptacle of the first embodiment of the present invention.
FIG. 7B is a side view of the plug piece of the first embodiment of the present invention connected with the receptacle of the first embodiment of the present invention.
FIG. 7C is a top view of the plug piece of the first embodiment of the present invention connected with the receptacle of the first embodiment of the present invention.
FIG. 7D is a cross-sectional view of FIG. 7C cut along the line "A-A" showing the plug piece of the first embodiment of the present invention connected with the receptacle of the first embodiment of the present invention.
FIG. 8A is a perspective view of two jewelry members securely connected by a splicing structure of the present invention, wherein the plug piece is the first embodiment of the present invention.
FIG. 8B is a bottom view of the two jewelry members securely connected by the splicing structure of the present application, wherein the plug piece is the first embodiment of the present invention.
FIG. 8C is a cross-sectional view of FIG. 8B cut along the line "A-A' showing the two jewelry members securely connected by the splicing structure of the present invention, wherein the plug piece is the first embodiment of the present invention.
FIG. 9A is a perspective view of the plug piece of the second embodiment of the present invention connected with the receptacle of the first embodiment of the present invention.
FIG. 9B is a side view of the plug piece of the second embodiment of the present invention connected with the receptacle of the first embodiment of the present invention.
FIG. 9C is a top view of the plug piece of the second embodiment of the present invention connected with the receptacle of the first embodiment of the present invention.
FIG. 9D is a cross-sectional view of FIG. 9C cut along the line "A-A" showing the plug piece of the second embodiment of the present invention connected with the receptacle of the first embodiment of the present invention.
FIG. 10A is a perspective view of two jewelry members securely connected by a splicing structure of the present invention, wherein a plug piece is the first embodiment of the present invention.
FIG. 10B is a bottom view of the two jewelry members securely connected by the splicing structure of the present invention, wherein the plug piece is the first embodiment of the present invention.
FIG. 10C is a cross-sectional view of FIG. 10B cut along the line "A-A' showing the two jewelry members securely connected by the plug piece of the first embodiment of the present invention and the receptacle of the first embodiment of the present invention.
FIG. 11A is a perspective view of a single splicing block provided with the plug piece of the first embodiment of the present invention and the receptacle of the first embodiment of the present invention.
FIG. 11B is a top view of the single splicing block provided with the plug piece of the first embodiment of the present invention and the receptacle of the first embodiment of the present invention.
FIG. 11C is a cross-sectional view of FIG. 11B cut along the line "A-A" showing the single splicing block provided with the plug piece of the first embodiment of the present invention and the receptacle of the first embodiment of the present invention.
FIG. 12A is a perspective view of two splicing blocks provided with the plug piece of the first embodiment of the present invention and the receptacle of the first embodiment of the present invention.
FIG. 12B is a top view of two splicing blocks provided with the plug piece of the first embodiment of the present invention and the receptacle of the first embodiment of the present invention.
FIG. 12C is a cross-sectional view of FIG. 12B cut along the line "A-A" showing two splicing blocks provided with the plug piece of the first embodiment of the present invention and the receptacle of the first embodiment of the present invention.
FIG. 13A is a perspective view of a single splicing block provided with the plug piece of the second embodiment of the present invention and the receptacle of the first embodiment of the present invention.
FIG. 13B is a top view of a single splicing block provided with the plug piece of the second embodiment of the present invention and the receptacle of the first embodiment of the present invention.
FIG. 13C is a cross-sectional view of FIG. 13B cut along the line "A-A" showing a single splicing block provided with the plug piece of the second embodiment of the present invention and the receptacle of the first embodiment of the present invention.
FIG. 14A is a perspective view of two splicing blocks provided with the plug piece of the second embodiment of the present invention and the receptacle of the first embodiment of the present invention.
FIG. 14B is a top view of two splicing blocks provided with the plug piece of the second embodiment of the present invention and the receptacle of the first embodiment of the present invention.
FIG. 14C is a cross-sectional view of FIG. 14B cut along the line "A-A" showing two splicing blocks provided with the plug piece of the second embodiment of the present invention and the receptacle of the first embodiment of the present invention.
FIG. 15A is a perspective view of two jewelry members securely connected by a splicing structure of the present application, wherein a plug piece is a third embodiment of the present invention.
FIG. 15B is a bottom view of the two jewelry members securely connected by the splicing structure of the present application, wherein the plug piece is the third embodiment of the present invention.
FIG. 15C is a cross-sectional view of FIG. 15B cut along the line "A-A" showing the two jewelry members securely connected by the plug piece of the third embodiment of the present invention and the receptacle of the second embodiment of the present invention.

### DETAILED DESCRIPTION

The following detailed description is only exemplary in nature, and is not intended to limit the contents, applications or uses of the present invention.

A splicing structure of the present invention comprises two core components: a receptacle and a plug piece. The two components are configured to be spliced. The drawings show various embodiments of the present invention. The accompanied drawings are intended to illustrate various embodiments of the present invention being applied to actual products. In addition, the receptacle and the plug piece may be detachable, as illustrated in jewelry applications; or may be fixedly connected, as illustrated in toy applications.

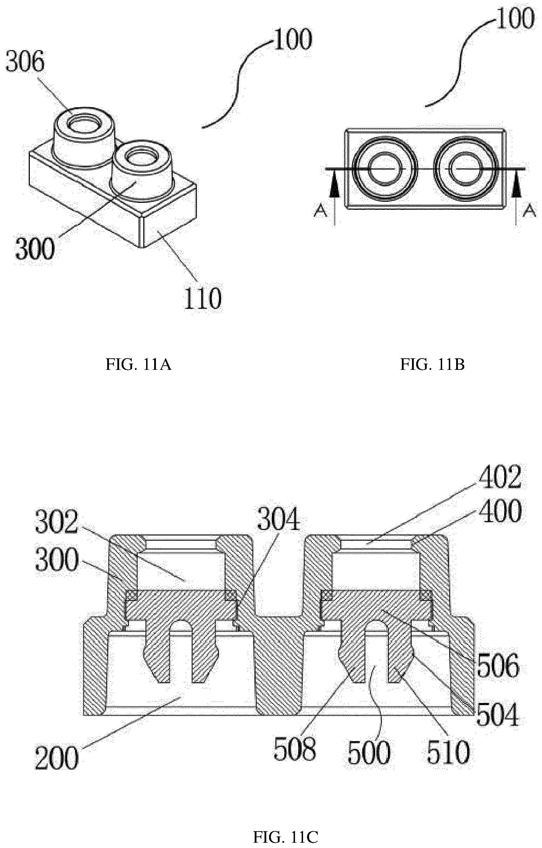

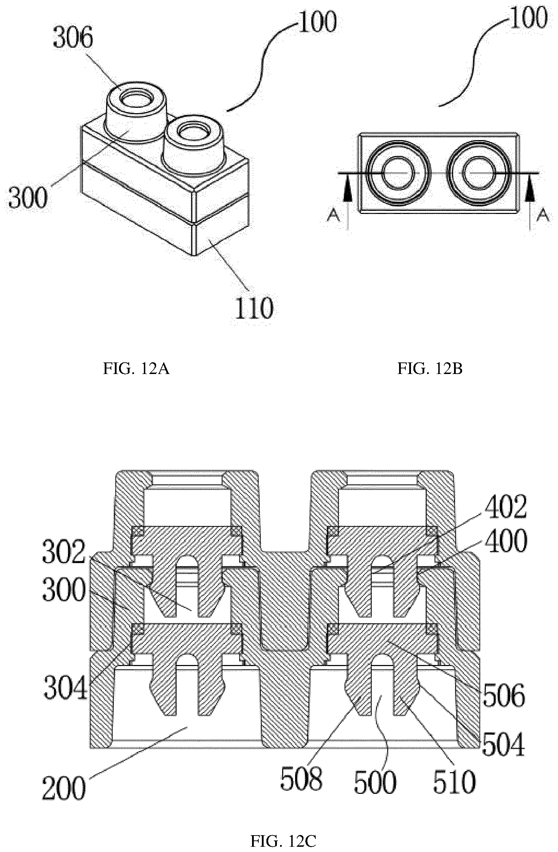

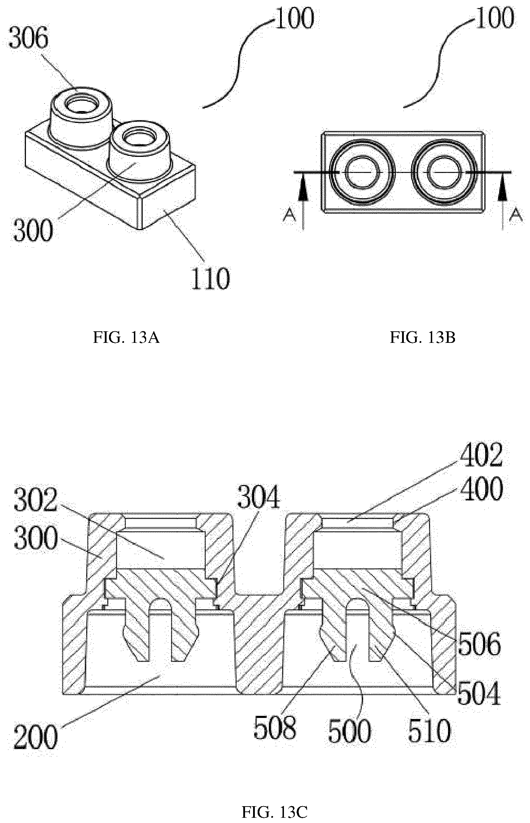

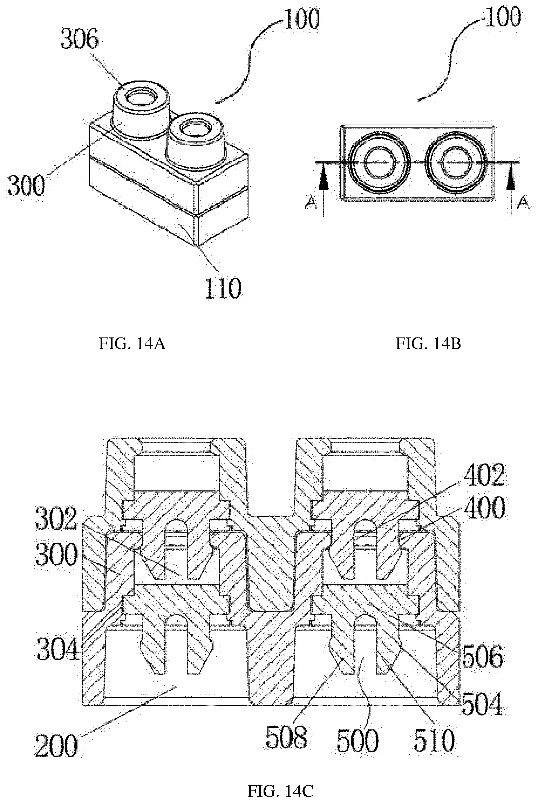

A splicing structure of the present invention is illustrated by a plurality of splicing blocks 100 as shown in FIG. 11A to FIG. 11B, FIG. 12A to FIG. 12B, FIG. 13A to FIG. 13B and FIG. 14A to FIG. 14B, and the present splicing structure is formed by detachably splicing one or more splicing blocks 100 with one another. In one embodiment of the splicing structure, for example, the splicing structure may be applied in toy, tool, furniture, handicraft, etc. The splicing blocks of the splicing structure above are easy to insert into and remove from one another and can also remain firmly spliced after long period of application. The present invention is simple in structure, easy to mass produce and has strong expandability in its applications.

Material suitable for use in manufacturing the splicing block 100 is not specifically limited in the present application, which may be any metallic material or non-metallic material. The metallic material suitable for use in manufacturing the splicing block 100 may comprise but is not limited to iron, steel, aluminum, copper, aluminum alloy, copper alloy, etc. The material suitable for use in manufacturing the splicing block 100 may be magnetic, which is used for firmly splicing the plurality of splicing blocks. The non-metallic material suitable for use in manufacturing the splicing blocks 100 may be any non-metallic material comprises but is not limited to wood, glass, ceramic, plastic, etc.

As shown in FIG. 11A to FIG. 14B, the splicing block 100 is provided with a body portion 110, and one or more sets of corresponding splicing holes 200 and splicing columns 300 formed on the body portion 110. According to actual needs or applications of the present splicing structure, the splicing block of the present invention may comprise one or more sets (such as two sets) of corresponding splicing holes 200 and splicing columns 300.

The body portion 110 may be cuboidal. In order to prevent sharp corner of the body portion 110 from scratching a user, the corners of the body portion 110 may be made into chamfers. Shape of the body portion of the present invention is not intended to be limited, and the shape of the body portion may be changed according to the use of the splicing structure.

The splicing column 300 is integrally formed on the body portion 110, and a plurality of splicing columns 300 are distributed on the body portion 110 at intervals in a matrix shape. Each of the splicing column 300 comprises: a cylindrical portion 306 projecting from a surface of the body portion 110, an inner hole 302 formed by extending axially from an inner side of the cylindrical portion 306; and a receptacle 400 integrally formed in the cylindrical portion 306 distal from the body portion 110. In order to increase frictional force between the receptacle 400 and the inner hole 302, so as to prevent a plug piece 500 from falling off the receptacle 400, wall of the inner hole 302 of the splicing column 300 is preferably formed with a rough surface. In one embodiment, the plug piece 500 and the wall of the inner hole 302 of the splicing column 300 are pressed against each other.

The splicing hole 200 is a circular hole recessed from an opposite surface of the body portion 110 relative to the surface of the splicing column 300, and the splicing column 300 and the corresponding splicing hole 200 are coaxially arranged. An inner diameter of the splicing hole 200 is equal to or slightly greater than an outer diameter of the splicing column 300. The splicing hole 200 and the inner hole 302 of each splicing column 300 are coaxially formed and are connected. In order to eliminate any gaps between two splicing blocks 100 when being spliced together, a depth of the splicing hole 200 is preferably equal to or slightly greater than a height of the splicing column 300.

By adopting the technical solutions of the present invention, the splicing blocks may be made from a range of materials, the present invention greatly improves diversity of applications, ensures reliable connection and fixation between the splicing blocks, reduces production costs of the splicing blocks, and improves mass production of the splicing blocks, thus achieving good technical effects.

The splicing structure of the present invention further comprises: the receptacle 400 having an insertion hole 402, wherein the insertion hole 402 may be a circular hole having an inner diameter of a first diameter; and the plug piece 500 having an insertion rod 502, wherein the insertion rod 502 may be a cylindrical with an outer diameter of a second diameter, a continuous protrusion or one or more discontinuous protrusions 504 are arranged around periphery of the insertion rod 502, and the protrusions 504 have an outer diameter of a third diameter. The plug piece 500 is mounted between the inner hole 302 of the splicing column 300 and the splicing hole 200, while the receptacle 400 is mounted within the inner hole 302 of the splicing column 300.

In one embodiment, at least the following relationship is satisfied between the receptacle 400 and the plug piece 500: the first diameter is greater than the second diameter, and the first diameter is smaller than the third diameter. Accordingly, when two splicing blocks 100 are spliced by inserting splicing column 300 of the second splicing block into splicing hole 200 of the first splicing block, insertion rod 502 of the first splicing block is inserted into insertion hole 402 of the second splicing block by interference fit, and protrusions 504 within plug piece 500 of the first splicing block snap fits into the insertion hole 402 of the second splicing block to firmly splicing the two splicing blocks.

The receptacle 400 and the plug piece 500 are coaxially arranged, and material suitable for manufacturing the receptacle 400 and the plug piece 500 may be plastic (such as hard plastic), soft wood, etc.

In a first aspect of the present invention, the receptacle 400 includes two embodiments:

### First embodiment of the receptacle

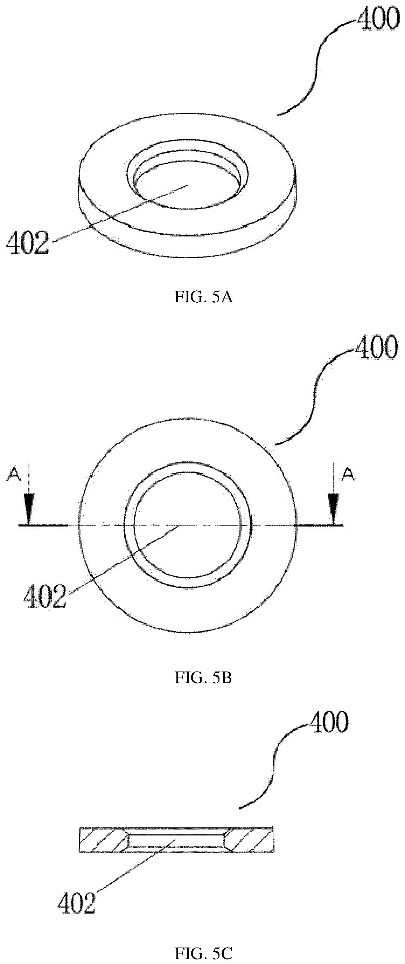

FIG. 5A to FIG. 5C show various views of the receptacle according to the first embodiment of the present invention. The receptacle 400 in this embodiment is approximately circular, and the insertion hole 402 of the receptacle 400 has three parts: two end portions with a larger diameter and a middle portion with a smaller diameter relative to the two end portions, such that the insertion hole 402 shows a bidirectional trumpet shape. The aforementioned structure is configured to accommodate the insertion rod 502 and the protrusions 504 of the plug piece 500, such that when the receptacle 400 and the plug piece 500 are spliced with each other, the insertion rod 502 of the plug piece 500 is capable of passing through the insertion hole 402 of the receptacle 400 smoothly

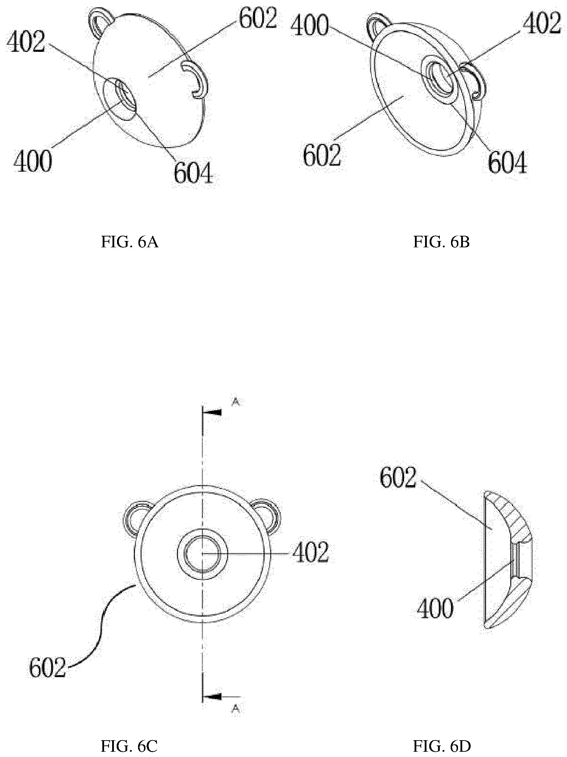

FIG. 6A to FIG. 6D show various views of the receptacle being mounted in a jewelry member. A jewelry member 602 comprises an opening for accommodating the receptacle 400, and an inner diameter of the opening corresponds to the outer diameter of the receptacle 400, such that the receptacle 400 is configured to be mounted within the opening of the jewelry member 602 by fixed connection or detachable connection.

### Second embodiment of the receptacle

The second embodiment of receptacle 400 may be cylindrical or in other shapes and is magnetic.

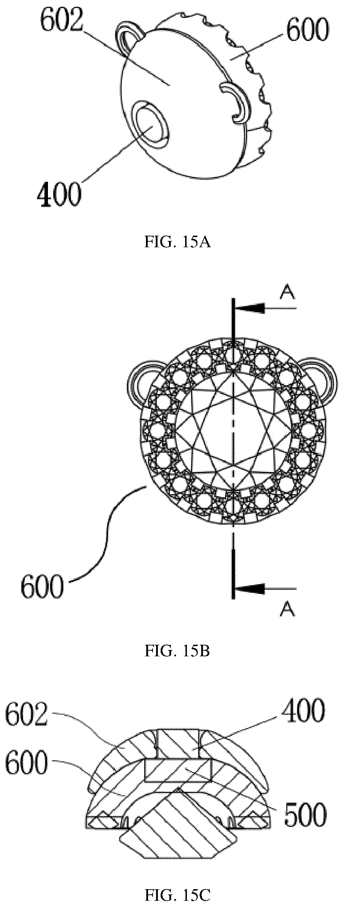

FIG. 15A to FIG. 15C show various views of the receptacle being mounted in the jewelry member. The jewelry member 602 comprises an opening for accommodating the receptacle 400, and an inner diameter of the opening corresponds to the outer diameter of the receptacle 400, such that the receptacle 400 is configured to be mounted within the hole of the jewelry member 602 by fixed connection or detachable connection.

In a second aspect of the present invention, the plug piece 500 comprises three embodiments:

### First embodiment of the plug piece

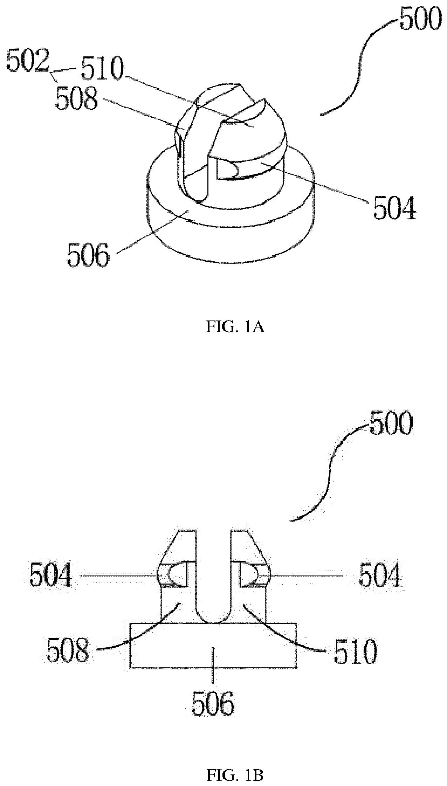

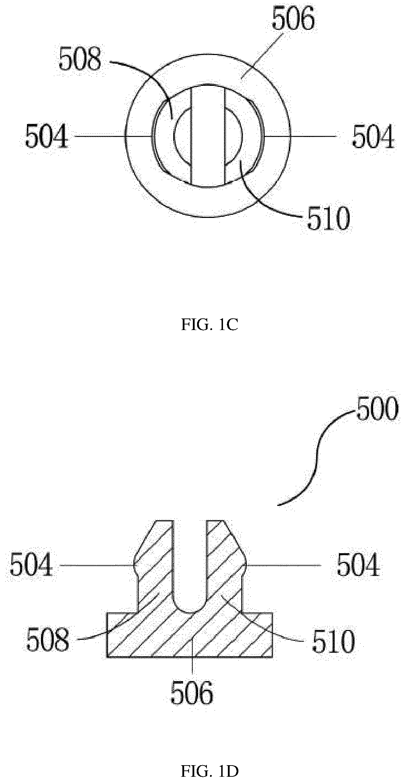

FIG. 1A to FIG. 1D show various views of the plug piece according to the first embodiment of the present invention. The plug piece 500 of the first embodiment comprises insertion rod 502. The insertion rod 502 comprises: a base 506, wherein the insertion rod 502 is mounted between the inner hole 302 of the splicing column 300 and the splicing hole 200 through the base 506, and preferably, the base 506 and the inner hole 302 are integrally formed; and a first insertion member 508 and a second insertion member 510, wherein the first insertion member 508 and the second insertion member 510 are arranged on the same side of the base 506, and the protrusions 504 is arranged around peripheries of the first insertion member 508 and the second insertion member 510. The protrusions 504 are arranged at a middle portion of the periphery of the first insertion member 508, and the first insertion member 508 is tapered inwardly from the protrusion 504 towards end of the first insertion member distal from the base 506.

With reference to FIG. 1A, the first insertion member 508 and the second insertion member 510 may be two columnar structures which are symmetrically arranged on the base 506 and have a cross section of a half circle. The protrusions 504 are formed by protruding outwardly at middle portions of the peripheries of the first insertion member 508 and the second insertion member 510, and a gap is left between the first insertion member 508 and the second insertion member 510. In one embodiment, the insertion rod may comprise one, two or more insertion members. The inner diameter of the insertion hole 402 is smaller than the outer diameter of the protrusions 504, and the inner diameter of the insertion hole 402 is greater than the outer diameter of the insertion rod 502. By such configuration: when the plug piece 500 splices with the receptacle 400, the first insertion member 508 and the second insertion member 510 bend inwards and deforms slightly allowing the protrusions 504 of the insertion rod 502 with the outer diameter greater than the inner diameter of the insertion hole 402 to pass through the insertion hole 402 of the receptacle 400. After the protrusions 504 of the insertion rod 502 pass through the insertion hole 402 of the receptacle 400, the remaining part of the insertion rod 502 of the plug piece 500 having the outer diameter smaller than the inner diameter of the insertion hole 402 of the receptacle 400 can be accommodated in the insertion hole 402 of the receptacle 400. Meanwhile, since the outer diameter of the protrusion 504 is greater than the inner diameter of the insertion hole 402, the receptacle 400 and the plug piece 500 are secured by snap fit connection between the protrusions 504 of the plug piece 500 and the insertion hole 402.

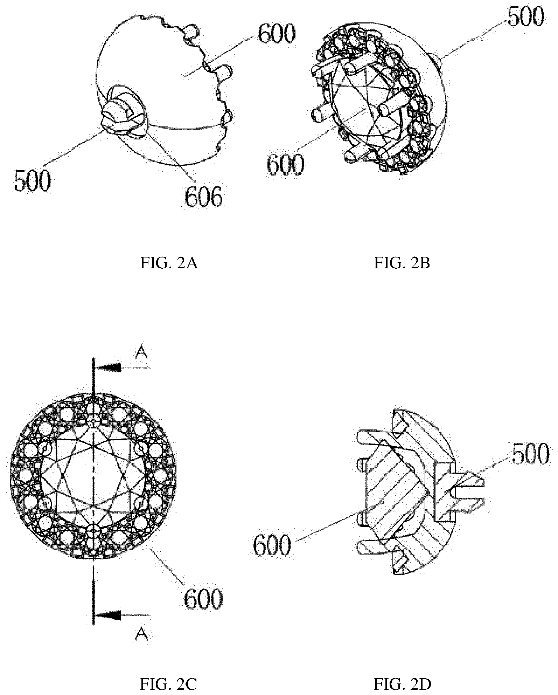

FIG. 2A to FIG. 2D show various views when the plug piece 500 of the first embodiment of the present invention is mounted in the jewelry member 600. The jewelry member 600 is provided with a cavity for accommodating the plug piece 500, and an outer diameter of the cavity is smaller than an outer diameter of the base 506 of the plug piece 500 or the outer diameter of the cavity is matched with the outer diameter of the base 506, such that the base 506 is accommodated within the cavity. Moreover, the outer diameter of the cavity is larger than the insertion rod 502, such that the plug piece 500 would not fall out of the jewelry member 600. Meanwhile, the insertion rod 502 may be exposed from the jewelry member 600.

### Second embodiment of the plug piece

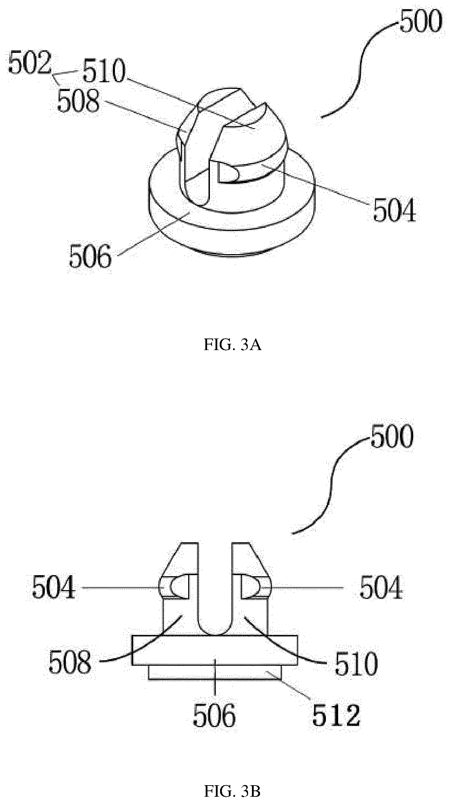

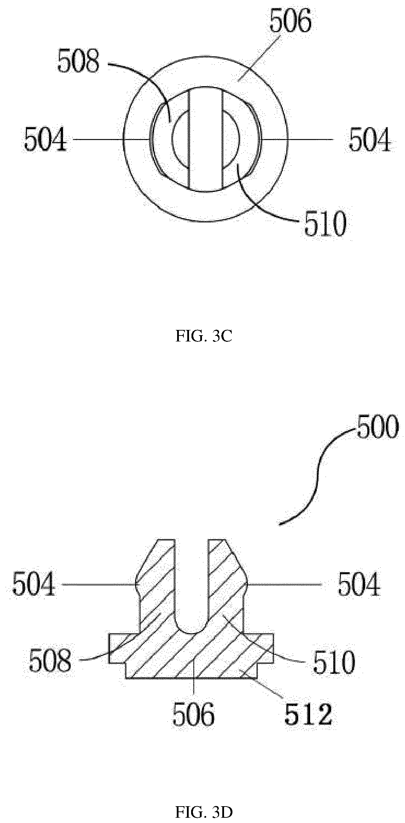

FIG. 3A to FIG. 3D show various views of the plug piece according to the second embodiment of the present invention. The plug piece 500 of the second embodiment comprises insertion rod 502. The insertion rod 502 comprises: a base 506, wherein the insertion rod 502 is mounted between the inner hole 302 of the splicing column 300 and the splicing hole 200 by detachable connection through the base 506, the insertion rod 502 comprises a platform 512 at one end of the base 506, an outer diameter of the platform 512 is smaller than the outer diameter of the base 506, and preferably, inner wall of the inner hole 302 comprises indentation 304 that complements to the base 506 (the base 506 is configured to fit in indentation 304), and the insertion rod 502 is mounted in the splicing column 300 by snap fit connection between the base 506 and the indentation 304; and a first insertion member 508 and a second insertion member 510, wherein the first insertion member 508 and the second insertion member 510 are arranged on the same side of the base 506, and the protrusions 504 are arranged around peripheries of the first insertion member 508 and the second insertion member 510. The protrusions 504 are arranged at middle portions of the peripheries of the first insertion member 508 and the second insertion member 510, and the first insertion member 508 and the second insertion member 510 are tapered inwardly from the protrusions 504 towards ends of the first insertion member and the second insertion member distal from the base 506.

With reference to FIG. 3A, the first insertion member 508 and the second insertion member 510 may be two columnar structures which are symmetrically arranged on the base 506 and have a cross section of a half circle. The protrusions 504 are formed by protruding outwardly at the middle portions of the peripheries of the first insertion member 508 and the second insertion member 510, and a gap is spaced between the first insertion member 508 and the second insertion member 510. The inner diameter of the insertion hole 402 is smaller than the outer diameter of the protrusions 504, and the inner diameter of the insertion hole 402 is greater than the outer diameter of the insertion rod 502. By such configuration: when the plug piece 500 splices with the receptacle 400, the first insertion member 508 and the second insertion member 510 bend inwards and slightly deform to allow the protrusions 504 of the insertion rod 502 with the outer diameter greater than the inner diameter of the insertion hole 402 to pass through the insertion hole 402 of the receptacle 400. After the protrusions 504 of the insertion rod 502 pass through the insertion hole 402 of the receptacle 400, the remaining part of the insertion rod 502 of the plug piece 500 having outer diameter smaller than the inner diameter of the insertion hole 402 of the receptacle 400 is accommodated in the insertion hole 402 of the receptacle 400. Meanwhile, since the outer diameter of the insertion rod 502 is greater than the inner diameter of the insertion hole 402, the plug piece 500 is securely mounted by snap fit connection between the insertion rod 502 and the insertion hole 402.

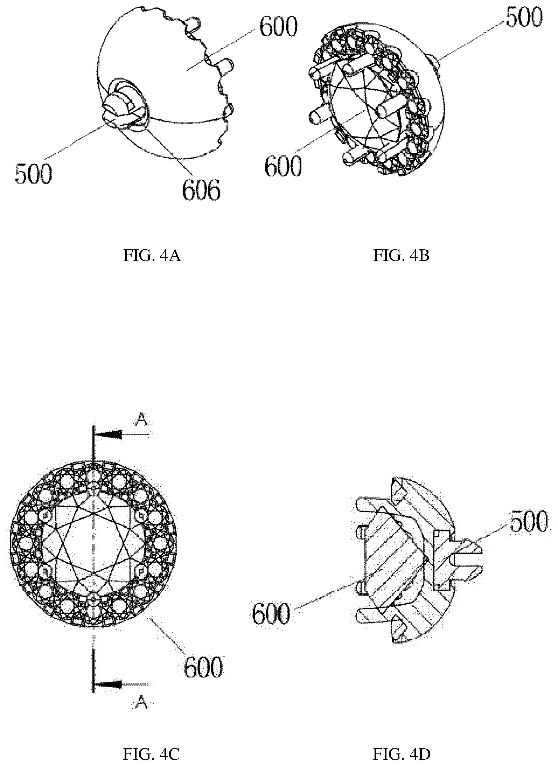

FIG. 4A to FIG. 4D show various views of the plug piece 500 of the second embodiment is mounted in the jewelry member 600. The jewelry member 600 comprises a cavity for accommodating the plug piece 500, and an outer diameter of the cavity is smaller than an outer diameter of the base 506 of the plug piece 500. Moreover, the outer diameter of the cavity is greater than the outer diameter of the insertion rod 502 and the outer diameter of the protrusions 504, such that the plug piece 500 does not fall out of the jewelry member 600. Meanwhile, the insertion rod 502 is exposed from the jewelry member 600.

### Third embodiment of the plug piece

A third embodiment of plug piece of the present invention may be approximately cylindrical or in other shapes and is magnetic.

FIG. 15A to FIG. 15C show various views of the receptacle being mounted in the jewelry member. The jewelry member 600 comprises a cavity for accommodating the plug piece 500, and an outer diameter of the cavity corresponds with the outer diameter of the plug piece 500, such that the plug piece 500 snap fit within the cavity of the jewelry member 600.

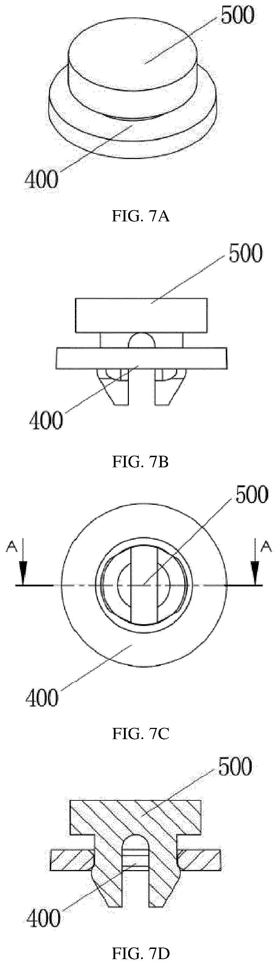

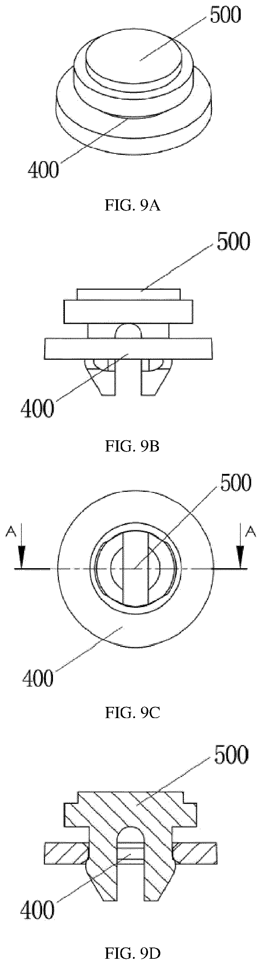

FIG. 7A to FIG. 7D and FIG. 9A to FIG. 9D respectively show various views of the plug piece according to first and second embodiments of the present invention splicing with the receptacle of the first embodiment of the present invention.

The plug piece 500 is gradually spliced with the receptacle 400. Firstly, when an end portion of the insertion rod 502 of the plug piece 500 is in contact with the insertion hole 402 of the receptacle 400, the first insertion member 508 and the second insertion member 510 bend inwardly and slightly deform allowing the protrusions 504 of the insertion rod 502 with the outer diameter greater than the inner diameter of the insertion hole 402 to pass through the insertion hole 402 of the receptacle 400. After the protrusions 504 of the insertion rod 502 pass through the insertion hole 402 of the receptacle 400, the remaining part of the insertion rod 502 of the plug piece 500 is accommodated in the insertion hole 402 of the receptacle 400 as the outer diameter of the insertion rod is smaller than the inner diameter of the insertion hole 402 of the receptacle 400. Meanwhile, since the outer diameter of the protrusions 504 are greater than the inner diameter of the insertion hole 402, the protrusions 504 may abut on the insertion hole 402, such that the plug piece 500 has passed through the insertion hole 402 is restricted from returning, thus the plug piece 500 is mounted within the receptacle 400 by snap fit connection between the protrusions 504 with the insertion hole 402.

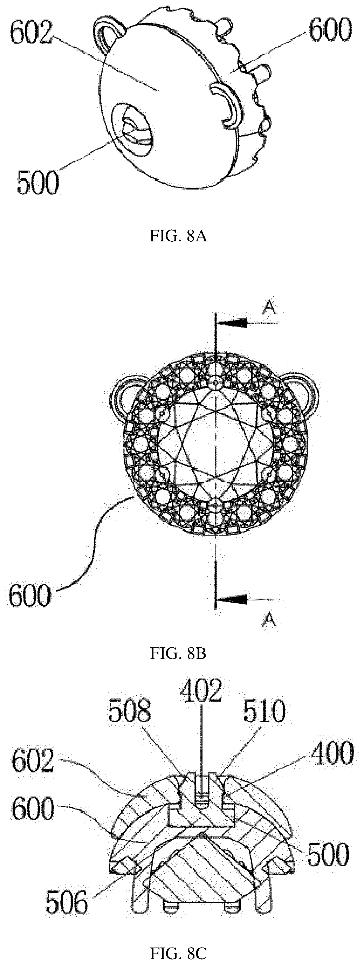

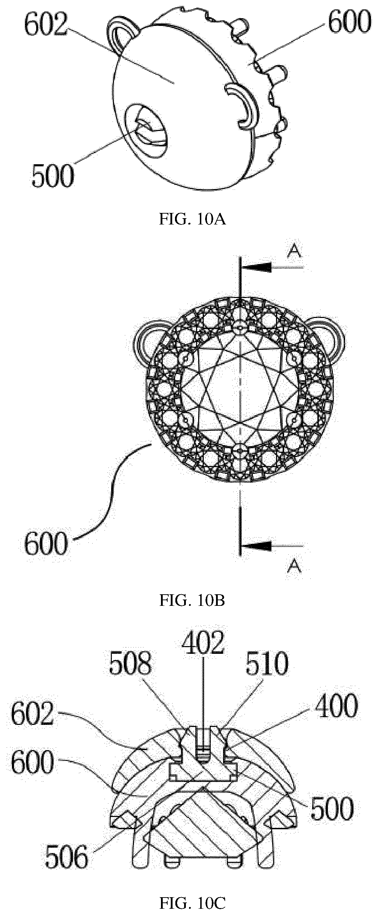

FIG. 8A to FIG. 8C and FIG. 10A to FIG. 10C respectively show various views of two jewelry members provided with the plug piece according to first and second embodiments of the present invention and the receptacle according to first embodiment of the present invention when being spliced with each other.

The receptacle 400 is mounted in the jewelry member 602 by fixed connection (integral formation or adhesion) or detachable connection (interference fit or magnetic connection), and the plug piece 500 is mounted in the jewelry member 600 by fixed connection (integral formation or adhesion) or detachable connection (interference fit or magnetic connection).

The plug piece 500 in the jewelry member 600 and the receptacle 400 in the jewelry member 602 are spliced. Firstly, when an end portion of the insertion rod 502 of the plug piece 500 is in contact with the insertion hole 402 of the receptacle 400, the first insertion member 508 and the second insertion member 510 bend inwards and slightly deform to enable the protrusions 504 of the insertion rod 502 having an outer diameter of the insertion hole 402 to pass through the insertion hole 402. Then, after the protrusions 504 of the insertion rod 502 pass through the insertion hole 402 of the receptacle 400, the remaining part of the insertion rod 502 of the plug piece 500 which has an outer diameter smaller than the inner diameter of the insertion hole 402 of the receptacle 400 is configured to accommodate inside the insertion hole 402 of the receptacle 400. Meanwhile, since the outer diameter of the protrusions 504 is greater than the inner diameter of the insertion hole 402, the protrusions 504 may abut on the insertion hole 402, such that the plug piece 500 which has passed through the insertion hole 402 is restricted from returning, thus the plug piece 500 is mounted within the receptacle 400 by snap fit connection between the protrusions 504 with the insertion hole 400. Then, the jewelry member 600 and the jewelry member 602 are firmly spliced.

FIG. 15A to FIG. 15C show various views of two jewelry members provided with the plug piece according to the third embodiment of the present invention and the receptacle according to the second embodiment of the present invention when being spliced with each other. The receptacle 400 and the plug piece 500 may be cylindrical or in other suitable shapes capable of being mounted in the jewelry member.

The receptacle 400 is mounted in the jewelry member 602 by fixed connection (integral formation or adhesion) or detachable connection (interference fit or magnetic connection), and the plug piece 500 is mounted in the jewelry member 600 by fixed connection (integral formation or adhesion) or detachable connection (interference fit or magnetic connection).

The plug piece 500 in the jewelry member 600 and the receptacle 400 in the jewelry member 602 are spliced. When the plug piece 500 are in contact with the receptacle 400, the plug piece 500 and the receptacle 400 are connected by magnetic forces, and then the jewelry member 600 and the jewelry member 602 are spliced.

It should be noted that each of two splicing blocks 100 being spliced with each other in the present invention is each provided with the splicing hole 200 and the splicing column 300, and the two splicing blocks 100 may interchange in position when being spliced.

In addition, according to the embodiments of the present invention, the jewelry member (a jewelry-like decorative component, such as a necklace, a bracelet, a pendant, a ring, an earring, a pendant, etc.) disclosed herein is only an example of one of the embodiments of the present invention, and the splicing block 100 provided with the receptacle 400 and the plug piece 500 may also be a related component applied in the fields of toys, handicrafts and furniture, it should be understood that the splicing structure of the present invention may also be applied in the fields of toys, handicrafts and furniture, such that two or more components are connected conveniently and stably.

## Claims

1. A splicing structure comprising
a first member (600) having a cavity; and
a second member (602) having an opening,
wherein said splicing structure further comprises
a receptacle (400) having an insertion hole (402), said insertion hole 402 having an inner diameter of a first diameter; and
a plug piece (500) having an insertion rod (502), said insertion rod (502) having an outer diameter of a second diameter, said insertion rod (502) comprises a continuous or one or more discontinuous protrusions (504) arranged around periphery thereof, said protrusions (504) having an outer diameter of a third diameter;
wherein said receptacle (400) and said plug piece (500) have the following relationships: said first diameter is greater than said second diameter, said first diameter is smaller than said third diameter;
wherein outer diameter of said cavity of the first member (600) is smaller or equal to outer diameter of base (506) of the plug piece (500); inner diameter of said opening of the second member (602) is equal to outer diameter of the receptacle (400);
wherein said plug piece (500) is mounted in the first member (600); said receptacle (400) is mounted in the second member (602); wherein the first member (600) and the second member (602) is spliced together through snap fit connection between the protrusions (504) on the insertion rod (502) and the insertion hole (402).

2. The splicing structure of claim 1, wherein said insertion rod (502) comprises a first insertion member (508) and a second insertion member (510), said first insertion member (508) and said second insertion member (510) are arranged on the same side of the base (506) and said first insertion member (508) and the second insertion member (510) include said protrusions (504) around peripheries thereof.

3. The splicing structure of claim 2, wherein said protrusions (504) are arranged at middle portions of peripheries of the first and second insertion members (508, 510), the first and second insertion members (508, 510) taper inwardly from the protrusions towards ends distal from the base (506) of the first and second insertion member.

4. The splicing structure of claim 2, wherein inner wall of said cavity of the first member (600) comprises one or more indentations (304) corresponding to the base (506), said insertion rod (502) is mounted within the first member (600) through snap fit connection between the base (506) and the one or more indentations (304).

5. The splicing structure of any one of claims 1-4, wherein the base (506) of the plug piece (500) are integrally formed with the first member (600) or said receptacle (400) and said second member (602) are integrally formed.

6. The splicing structure of any one of claims 1-4, wherein the base (506) of the plug piece (500) is fixedly or detachably mounted within the cavity of the first member (600) by adhesion, interference fit, and/or magnetic force or said receptacle (400) is fixedly or detachably mounted within the opening of the second member (602) by adhesion, interference fit, and/or magnetic force

7. The splicing structure of any one of claims 1-4, wherein said receptacle (400) and said plug piece (500) are detachably spliced together by interference fit and/or magnetic force.

8. The splicing structure of any one of claims 1-4, wherein said first member (600) and said second member (602) are jewelry components.

9. A splicing structure comprises
a splicing block (100) capable to detachably spliced with one another, said splicing block (100) comprises a splicing hole (200), a splicing column (300) capable of being inserted into a splicing hole (200) of another splicing block, said splicing column (300), the splicing column (300) comprises an inner hole (302) formed by extending along an axial direction thereof,
a receptacle (400) having an insertion hole (402), said insertion hole 402 having an inner diameter of a first diameter; and
a plug piece (500) having an insertion rod (502), said insertion rod (502) having an outer diameter of a second diameter, said insertion rod (502) comprises a continuous or one or more discontinuous protrusions (504) arranged around periphery thereof, said protrusions (504) having an outer diameter of a third diameter;
wherein said receptacle (400) and said plug piece (500) have the following relationships: said first diameter is greater than said second diameter, said first diameter is smaller than said third diameter;
wherein said plug piece (500) is mounted between the inner hole (302) of the splicing column (300) and the splicing hole (200), and the receptacle (400) is mounted within the inner hole (302) of the splicing column (300);
wherein when the splicing column (300) of the splicing block is inserted into the splicing hole (200) of said another splicing block to splice the two splicing blocks, the insertion rod (502) of said splicing block is inserted into the insertion hole (402) of said another splicing block by interference fit, and the two splicing blocks are firmly spliced together by snap fit connection between the protrusions (504) and the insertion hole (402) of said another splicing block.

10. The splicing structure of claim 9, wherein the splicing column (300) and the splicing hole (200) of the same splicing block (100) are coaxially arranged, said inner hole (302) of the splicing column (300) is connected with and coaxial with the splicing hole (200).

11. The splicing structure of claim 9, wherein said insertion rod (502) comprises a base (506), said insertion rod (502) fixedly or detachably mounted between the inner hole (302) of the splicing column (300) and the splicing hole (200) through said base (506);
a first insertion member (508) and a second insertion member (510), said first insertion member (508) and said second insertion member (510) are arranged on the same side of the base (506) and comprise said protrusions (504) around the peripheries thereof.

12. The splicing structure of claim 11, wherein said protrusions (504) are arranged at middle portions of peripheries of the first and second insertion members (508, 510), the first and second insertion members (508, 510) taper inwardly from the protrusions towards ends distal from the base (506) of the first and second insertion member.

13. The splicing structure of claim 12, wherein inner wall of said inner hole (302) comprises one or more indentations (304) corresponding to the base (506), said insertion rod (502) is mounted within the splicing column (300) through snap fit connection between the base (506) and the one or more indentations (304).

14. The splicing structure of claim 9, wherein said plug piece (500) is integrally formed with the splicing column (300).

15. The splicing structure of claim 12, wherein inner wall of said inner hole (302) comprises one or more indentations (304) corresponding to the base (506) and wherein the base (506), the one or more indentations (304) and inner wall of said inner hole (302) are integrally formed.
